# EUROPÄISCHE PATENTSCHRIFT

(11) **EP 1 742 755 B1**
(45) Veröffentlichungstag und Bekanntmachung des Hinweises auf die Patenterteilung: **13.01.2010**
(21) Anmeldenummer: 05740498.0
(22) Anmeldetag: 20.04.2005
(51) Int. Cl.: B23C 5/22, B23B 51/04

(54) **MESSERPLATTE UND WERKZEUG ZUR SPANENDEN BEARBEITUNG VON BOHRUNGSOBERFLÄCHEN**
KNIFE PLATE AND TOOL FOR MACHINING BORE SURFACES
PLAQUETTE DE COUPE ET OUTIL POUR USINAGE PAR ENLEVEMENT DE COPEAUX DE SURFACES DE FORAGE

(30) Priorität: 22.04.2004 DE 102004019535
(43) Veröffentlichungstag der Anmeldung: 17.01.2007
(73) Patentinhaber: MAPAL Fabrik für Präzisionswerkzeuge Dr. Kress KG, D-73431 Aalen (DE)
(72) Erfinder: KRESS, Dieter, 73431 Aalen (DE); HÄBERLE, Friedrich, 73466 Lauchheim (DE)
(74) Vertreter: Gleiss & Grosse
(86) Internationale Anmeldenummer: PCT/EP2005/004192
(87) Internationale Veröffentlichungsnummer: WO 2005/102574

(56) Entgegenhaltungen:
- EP-A- 0 313 534
- US-A- 6 079 912
- US-B1- 6 213 691

## Beschreibung

Die Erfindung betrifft ein Werkzeug zur spanenden Bearbeitung von Bohrungsoberflächen gemäß Oberbegriff des Anspruchs und wie aus US-A-6079912 bekannt.

Messerplatten und Werkzeuge der hier angesprochenen Art sind bekannt. Bei den Messerplatten ist vorgesehen, dass diese eine Vorderseite und eine Oberseite aufweisen. Die Vorderseite ist bei der spanenden Bearbeitung einer Bohrungsoberfläche in Drehrichtung eines Werkzeugs gewandt, in die die Messerplatte eingesetzt wird. Die Oberseite weist im montierten Zustand vom Grundkörper des Werkzeugs weg. Die Schnittlinie zwischen Vorder- und Oberseite bildet mindestens zwei geometrisch definierte Schneiden, die an den Enden einer durch die Schnittlinie gebildeten Seitenkante liegen.

Werkzeuge der oben angesprochenen Art weisen mindestens zwei Messerplatten auf, von denen eine in die Stirnfläche und eine andere in die Umfangsfläche des Werkzeugs eingelassen ist. Die Messerplatten weisen mindestens zwei geometrisch definierte Schneiden auf.

Nachteil der bekannten Messerplatten und Werkzeuge ist, dass sie nur für einen bestimmten Bearbeitungsvorgang, die Schrupp- oder Schlichtbearbeitung einer Bohrungsoberfläche eingesetzt werden können. Es ist daher erforderlich, für unterschiedliche Bearbeitungsvorgänge verschiedene Messerplatten beziehungsweise Werkzeuge vorzusehen. Bei Verwendung derartiger Messerplatten und Werkzeuge kann es leicht zu Verwechslungen kommen, weil sich Schrupp- und Schlichtschneiden auf den ersten Blick insbesondere bei kleineren Messerplatten nicht ohne weiteres unterscheiden lassen. Derartige Verwechslungen können zu Schäden an dem bearbeiteten Werkstück oder auch an dem Werkzeug führen.

Aufgabe der Erfindung ist es, eine Messerplatte und ein Werkzeug zu schaffen, die diese Nachteile nicht aufweisen.

Zur Lösung dieser Aufgabe wird eine Messerplatte vorgeschlagen, die die in Anspruch 1 genannten Merkmale aufweist. Sie zeichnet sich dadurch aus, dass sie eine durch eine Schnittlinie von Vorder- und Oberseite gebildete Seitenkante aufweist, an deren Enden jeweils geometrisch definierte Schneiden vorgesehen sind. Diese sind verschieden ausgebildet, so dass eine der Schneiden als Schruppschneide und die andere als Schlichtschneide einsetzbar ist.

Weitere Ausgestaltungen ergeben sich aus den Unteransprüchen.

Zur Lösung dieser Aufgabe wird auch ein Werkzeug vorgeschlagen, das die in Anspruch 7 genannten Merkmale aufweist. Es dient der spanenden Bearbeitung von Bohrungsoberflächen und umfasst mindestens eine in die Stirnfläche des Werkzeugs eingesetzte erste Messerplatte und mindestens eine in die Umfangsfläche eingesetzte zweite Messerplatte, die jeweils mindestens zwei geometrisch definierte Schneiden aufweisen. Das Werkzeug zeichnet sich dadurch aus, dass die eine Schneide der Messerplatten als Schruppschneide und die andere als Schlichtschneide ausgebildet ist und dass die Schneiden an den beiden Enden einer Seitenkante der Messerplatte angeordnet sind. Durch diese Anordnung der beiden Schneidentypen an der Messerplatte ist beispielsweise sichergestellt, dass bei der Anbringung einer Messerplatte an der Umfangsfläche des Werkzeugs deren Schruppschneide in Eingriff mit der zu bearbeitenden Bohrungsoberfläche tritt, und dass entsprechend bei Einbau der Messerplatte in die Stirnfläche des Werkzeugs deren Schlichtschneide auf die zu bearbeitende Bohrungsoberfläche einwirkt. Je nach Ausrichtung der Messerplatte am Grundkörper des Werkzeugs kommen also die verschiedenen Schneidentypen in Eingriff mit dem Werkstück. Einerseits ist es also möglich, gleiche Messerplatten zu verwenden, was die Kosten der Lagerhaltung reduziert. Andererseits ist sichergestellt, dass je nach Montage am Werkzeug die gewünschte Schneide in Eingriff mit dem Werkstück tritt.

Weitere Ausgestaltungen ergeben sich aus den Unteransprüchen.

Die Erfindung wird im Folgenden anhand der Zeichnungen näher erläutert. Es zeigen:
- Figur 1: eine perspektivische Ansicht einer Messerplatte, wobei deren Vorder- und Oberseite sichtbar sind;
- Figur 2: eine weitere perspektivische Ansicht einer Messerplatte gemeinsam mit einer Spannschraube und einem Stellkeil und
- Figur 3: eine perspektivische Vorderansicht eines Werkzeugs mit in die Stirn- und Umfangsfläche eingesetzten Messerplatten.

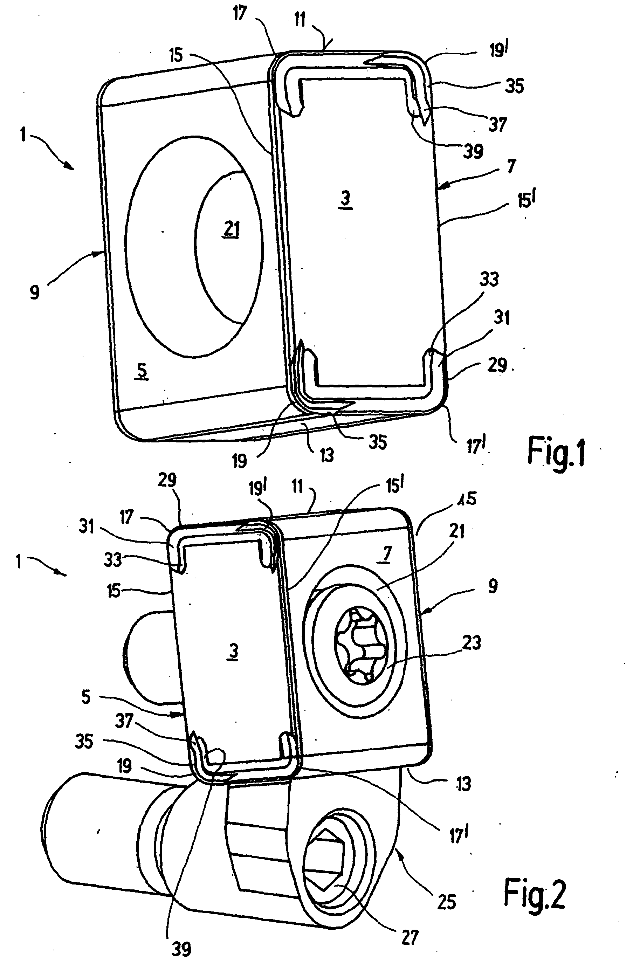

Die in Figur 1 dargestellte Messerplatte 1 weist eine dem Betrachter zugewandte Vorderseite 3 auf, die bei Verwendung der Messerplatte 1 in Drehrichtung des Werkzeugs weist, das unter Verwendung der Messerplatte 1 der spanenden Bearbeitung einer Bohrung dient. Die Messerplatte 1 weist außerdem eine Oberseite 5 auf, die bei Einbau der Messerplatte in ein Werkzeug dessen Grundkörper abgewandt ist. Der Oberseite 5 gegenüber liegend ist eine parallel zu dieser angeordnete Unterseite 7 vorgesehen, entsprechend ist der Vorderseite 3 gegenüber liegend eine Rückseite 9 vorgesehen, die parallel zur Vorderseite 3 verläuft. Die Vorderseite 3 und die Rückseite 9 gehen über vorzugsweise kreisbogenförmig gekrümmte Bereiche in Seitenflächen 11 und 13 der Messerplatte 1 über, die schmaler sind als die Vorder- und Rückseite der Messerplatte 1. Diese ist hier also, von der Vorderseite 3 aus gesehen, rechteckförmig ausgebildet. Denkbar ist es aber auch, die Messerplatte 1 so auszubilden, dass die Vorderseite 3 quadratisch ist.

Die Schnittlinie der Vorderseite 3 mit der Oberseite 5 bildet eine Seitenkante 15, entsprechend bildet die Schnittlinie der Vorderseite 3 mit der Unterseite 7 eine Seitenkante 15'.

An den Enden der Seitenkante 15 sind geometrisch definierte Schneiden vorgesehen, wobei hier die obere Schneide nahe der oberen Seitenfläche 11 als Schruppschneide 17 ausgelegt ist, während die am unteren Ende der Seitenkante 15 vorgesehene Schneide als Schlichtschneide 19 ausgebildet ist. An den gegenüber liegenden Enden der Seitenkante 15 sind also unterschiedliche Schneiden vorhanden.

Die Messerplatte 1 kann auch umgekehrt an einem Werkzeug befestigt werden, so dass deren Oberseite 5 zum Grundkörper des Werkzeugs hin gerichtet ist und die Unterseite 7 dem Betrachter zugewandt ist. Es ist also möglich, die Messerplatte 1 als Wendeplatte auszubilden und um eine gedachte Achse zu drehen, die auf dem Mittelpunkt der Vorderseite 3 senkrecht steht.

Die Seitenkante 15' ist punktsymmetrisch zur Seitenkante 15 ausgebildet: Oben ist eine Schlichtschneide 19' und unten eine Schruppschneide 17' vorgesehen. Die Schneiden sind also paarweise diagonal gegenüber liegend gleich und, folgt man den Seitenkanten der Vorderseite 3, jeweils abwechselnd als Schlicht- und Schruppschneide ausgelegt.

Vorzugsweise ist vorgesehen, dass die Rückseite 9 identisch ausgebildet ist wie die Vorderseite. Es ist also möglich, die Messerplatte 1 um eine gedachte Achse um 180° zu drehen, die senkrecht auf dem Mittelpunkt der oberen oder unteren Seitenfläche 11, 13 oder der Oberseite 5 oder der Unterseite 7 steht. Würde man die Messerplatte 1 um diese Achse drehen, sähe die Rückseite 9 also identisch aus wie die hier dargestellte Vorderseite 3 und wäre ebenso mit Schlicht- und Schruppschneiden versehen.

Figur 1 zeigt schließlich noch, dass die Messerplatte 1 eine die Oberseite 5 und die Rückseite 9 senkrecht durchdringende Bohrung 21 aufweist. Die der Aufnahme einer hier nicht dargestellten Spannschraube 23 dient, mit der die Messerplatte 1 am Grundkörper eines Werkzeugs befestigt werden kann.

Die Messerplatte 1 wird im Wesentlichen tangential zur Stirnfläche und/oder zur Umfangsfläche eines Werkzeugs an dessen Grundkörper befestigt. Die über die Schruppschneide 17, 17' beziehungsweise Schlichtschneide 19, 19' in die Messerplatte eingeleiteten Kräfte verlaufen im Wesentlichen senkrecht zur Mittelachse der die Spannschraube 23 in der Bohrung 21. Eine derartige Messerplatte wird als Tangentialplatte bezeichnet.

Figur 2 zeigt die Messerplatte 1 gemäß Figur 1 in perspektivischer Ansicht nach einer Drehung um 90° um eine gedachte Achse, die senkrecht auf den Seitenflächen 11 und 13 steht. Gleiche Teile sind mit gleichen Bezugsziffern versehen, so dass insofern auf die Beschreibung zu Figur 1 verwiesen wird, um Wiederholungen zu vermeiden.

Bei der Darstellung gemäß Figur 2 ist die mit einem Außengewinde versehene Spannschraube 23 zu erkennen, die die Messerplatte 1 durchdringt und in den hier nicht dargestellten Grundkörper eines Werkzeugs eingreift.

An der unteren Seitenfläche 13 liegt ein Stellkeil 25 an, der mittels einer Stellschraube 27 am Grundkörper des Werkzeugs befestigt wird, die vorzugsweise zwei Gewindebereiche aufweist, die gegenläufig ausgebildet sind. Ein erster Gewindebereich wirkt mit dem Stellkeil 25, ein zweiter mit dem Grundkörper des Werkzeugs zusammen.

Ein Stellkeil 25 der hier angesprochenen Art ist grundsätzlich bekannt. Er dient hier dazu, die Position der Messerplatte 1 senkrecht zur Mittelachse der Spannschraube 23 zu verändern, um beispielsweise den radialen Überstand einer in die Stirnfläche eines Werkzeugs eingesetzten Messerplatte 1 einzustellen, indem er mit Hilfe der Stellschraube 27 in Richtung von deren Mittelachse verlagerbar ist.

Aus der Darstellung gemäß Figur 2 ist ersichtlich, dass die Schruppschneide 17 eine außen umlaufende Schutzfase 29 mit einem Spanwinkel von 0° aufweist, das heißt, die Schutzfase schließt mit der Oberseite 5 einen Winkel von 90° ein. An die Schutzfase schließt sich eine Hauptspanfläche 31 an, die in eine Spanbrecherkante 33 übergeht. Von der Schruppschneide 17 abgetragene Späne laufen also von der Schutzfase 29 über die Hauptspanfläche 31 zur Spanbrecherkante 33 ab, wo sie gebrochen werden.

Die Schlichtschneide 19 weist zwei Spanflächen auf, wobei eine erste Spanfläche 35 unter einem steileren Winkel von der Schlichtschneide 19 abfällt als eine sich daran anschließende zweite Spanfläche 37. Die beiden Spanflächen gehen in eine Spanbrecherkante 39 über, an der von der Schlichtschneide 19 abgetragene Späne, die über die beiden Spanflächen 35 und 37 ablaufen, gebrochen werden.

Die anhand von Figur 2 erläuterten Ausgestaltungen der Schruppschneide 17 und der Schlichtschneide 19 sind auch in Figur 1 ersichtlich, in die die hier erwähnten Bezugszeichen ebenfalls eingetragen wurden.

Auch in Figur 1 wird deutlich, dass insbesondere die Schutzfase 29 sehr schmal ausgebildet ist, was durch zwei in geringem Abstand zueinander verlaufende Linien angedeutet ist.

Zusammenfassend wird zu den Erläuterungen zu den Figuren 1 und 2 festgehalten, dass die Messerplatte 1 vorzugsweise identische Begrenzungsflächen aufweist, nämlich identische Vorder- und Rückseiten 3, 9, identische Ober- und Unterseiten 5 und 7 sowie identische Seitenflächen 11 und 13. Die auf den Vorder- und Rückseiten 3 und 9 vorgesehenen Schrupp- und Schlichtschneiden 17, 17' und 19, 19' sind paarweise einander gegenüber liegend an den Seitenkanten 15 und 15' von Vorder- und Rückseite 3, 9 angeordnet. Dadurch ist die Messerplatte 1 als Wechselplatte verwendbar. Sie kann um eine senkrecht auf dem Mittelpunkt der Ober- oder Unterseite 5, 7 um 180° gedreht werden oder um eine Achse, die senkrecht auf dem Mittelpunkt der Vorder- oder Rückseite 3, 9 stehende Achse oder um eine Achse, die senkrecht auf dem Mittelpunkt der Seitenflächen 11 oder 13 steht.

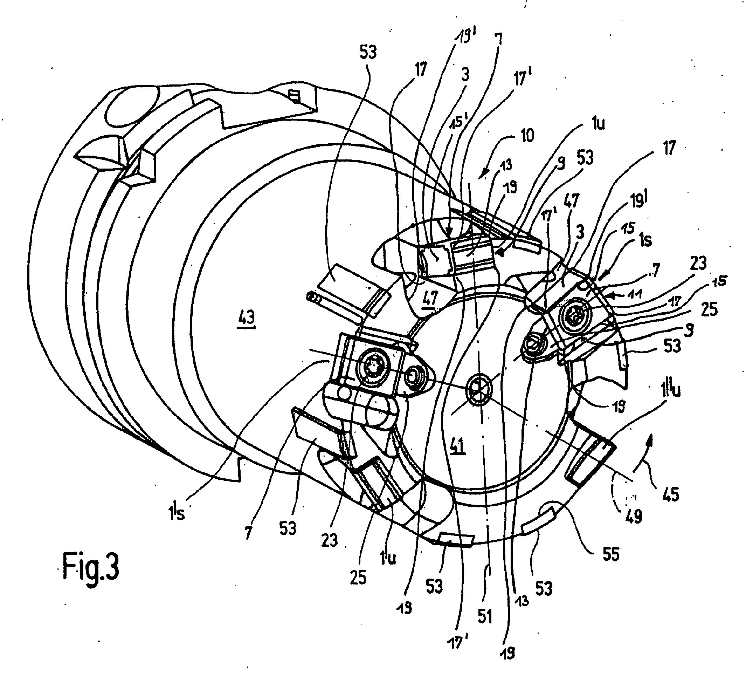

Figur 3 zeigt ein Werkzeug 10 in perspektivischer Ansicht von schräg vorne. Figur 3 zeigt also die Stirnfläche 41 und die Umfangsfläche 43 des Werkzeugs 10, in die jeweils mindestens eine Messerplatte 1 gemäß den Figuren 1 und 2 im Wesentlichen tangential eingesetzt ist. Das Werkzeug 10 ist im linken Bereich abgebrochen. Es kann direkt oder über einen Adapter mit einer Werkzeugmaschine oder auch mit anderen Werkzeugen verbunden werden, worauf hier nicht weiter eingegangen wird.

Bei dem hier dargestellten Ausführungsbeispiel sind in die Stirnfläche 41 zwei Messerplatten 1s und 1's eingesetzt. Diese Messerplatten sind identisch aufgebaut wie die oben beschriebenen. Gleiche Teile sind mit gleichen Bezugsziffern versehen. Es wird insofern auf die Beschreibung zu den Figuren 1 und 2 verwiesen.

Die Messerplatten 1 s und 1's sind quasi tangential in die Stirnfläche 41 eingesetzt, so dass deren dem Betrachter zugewandte Flächen im Wesentlichen parallel zur Stirnfläche 41 verlaufen. Es sind hier Stellkeile 25 vorgesehen, mit denen der Überstand der Messerplatten 1s, 1's über die Umfangsfläche 43 einstellbar ist.

Bei der Darstellung gemäß Figur 3 sind die Messerplatten 1 in der Position in die Stirnfläche eingebaut, die sich aus Figur 2 ergibt. Dem Betrachter von Figur 3 sind also die Unterseiten 7 zugewandt.

Bei der Messerplatte 1s ist die Vorderseite 3 mit der außen liegenden Schlichtschneide 19' zu erkennen, die bei Einbringung des Werkzeugs 10 in eine zu bearbeitende Bohrung mit deren Oberfläche in Eingriff tritt.

In der durch einen Pfeil 45 angedeuteten Drehrichtung des Werkzeugs 10 gesehen, ist vor der Vorderseite 3 eine Spannut 47 vorgesehen, über die von der Messerplatte 1s abgetragene Späne ablaufen können. Eine entsprechende Spannut ist auch bei der Messerplatte 1's vorgesehen.

Die Messerplatte 1s weist, wie anhand von Figur 2 erläutert, eine Rückseite 9 auf, die hier verdeckt ist. Erkennbar ist die Seitenkante 15 mit der Schlichtschneide 17 und der Schruppschneide 19. Es ist ersichtlich, dass die Schlichtschneide 19' der Vorderseite gemeinsam mit der Schruppschneide 17' an der Seitenkante 15 angeordnet ist.

Der Mittelachse 49 des Werkzeugs 10 ist die Seitenfläche 11 abgewandet.

Die Messerplatte 1s ist aus der exakten Tangentiallage leicht verschwenkt. Die außen liegende Seitenfläche 11 liegt etwas höher als die gegenüber liegende, am Stellkeil 25 anliegende Seitenfläche 13. Damit liegt die der Vorderseite 3 zugeordnete Schlichtschneide 19' höher als die im Bereich der gleichen Seitenkante 15 vorgesehene Schruppschneide 17'. Mit anderen Worten: Die Schlichtschneide 19' ragt weiter über die Stirnfläche 41 des Werkzeugs 10 heraus als die Schruppschneide 17'. Die Messerplatte 1s ist damit verschwenkt um eine auf dem Mittelpunkt der Vorderseite 3 stehende senkrechte Achse.

Die Messerplatte 1s ist außerdem um eine Achse verschwenkt, die senkrecht auf der Seitenfläche 13 und damit auf der Seitenfläche 11 steht. Dabei ist vorgesehen, dass die Schlichtschneide 19' der Vorderseite 3 etwas höher angeordnet ist und damit weiter über die Stirnfläche 41 hinaus ragt als die der Rückseite 9 zugeordnete Schruppschneide 17.

Durch die beiden überlagerten Verschwenkungen bildet die Schlichtschneide gegenüber der Stirnfläche 41 den höchsten Punkt der Messerplatte 1s. Da die Vorder- und Rückseite 3, 9, die Ober- und Unterseite 5, 7, die Seitenflächen 11 und 13 identisch ausgebildet sind, kann die Messerplatte 1s beliebig in die Stirnfläche 41 des Werkzeugs 10 eingesetzt werden. Es ist also unbeachtlich, ob, wie in Figur 3 dargestellt, die Unterseite 7 nach vorne zeigt oder die Oberseite 5, ob die Seitenfläche 11 nach außen weist, oder die Seitenfläche 13. Da die Messerplatte 1s um die beiden oben beschriebenen Achsen verkippt ist und die Schlichtschneide der Vorderseite stets den höchsten Punkt bildet, dient die Messerplatte der hier angesprochenen Art, die in die Stirnseite 41 des Werkzeugs 10 eingesetzt ist, stets der Schlichtbearbeitung.

Die spezielle gegenüber einer exakt tangentialen Anordnung leicht abweichende Positionierung der Messerplatte in der Stirnseite gilt für alle Messerplatten, die in ein Werkzeug 10 eingesetzt sind, hier also für die beiden Messerplatten 1s und 1's.

Es zeigt sich also, dass unabhängig von der Anzahl der in die Stirnfläche 41 eingesetzten Messerplatten und unabhängig von deren Anordnung stets eine Schlichtschneide zur Bearbeitung eines Werkstücks zur Verfügung steht. Obwohl also die Messerplatte sowohl Schrupp- als auch Schlichtschneiden aufweisen, wird bei Einbau in die Stirnfläche stets die gewünschte Schlichtschneide als aktive Schneide zur Verfügung gestellt.

Figur 3 zeigt auch die die Messerplatten 1s und 1's durchdringenden Spannschrauben 23, mit denen die Messerplatten am Grundkörper des Werkzeugs 10 befestigt sind.

Gedachte Verbindungslinien zwischen den Mittelpunkten der Schrauben 23, die die Messerplatten 1s und 1's halten, und der Mittelachse 49 des Werkzeugs 10, schließen beispielsweise einen Winkel von 120° ein. Die Messerplatten 1s und 1's sind symmetrisch zu einer senkrecht zur Stirnfläche 41 verlaufenden, die Mittelachse 49 schneidenden Durchmesserlinie 51 angeordnet.

In dem Bereich, in dem die Durchmesserlinie 51 die Umfangsfläche 43 des Werkzeugs 1 oben schneidet, ist eine Messerplatte 1u eingesetzt. Auch hier ist die Vorderseite 3 der Messerplatte ersichtlich, die eine Schruppschneide 17' aufweist. Diese trägt bei Einsatz des Werkzeuges 10 von einer Bohrungswandung Späne ab. Bei der Darstellung gemäß Figur 3 wird davon ausgegangen, dass die in Figur 2 als Rückseie 7 bezeichnete Fläche der Messerplatte 1u der Mittelachse 49 des Werkzeugs 10 abgewandt ist, also nach außen weist. Die anhand der Figuren 1 und 2 erläuterte Seitenfläche 13 ist hier dem Betrachter zugewandt. Die der Vorderseite 3 gegenüberliegende Rückseite 9 ist hier nicht sichtbar. Diese weist wie die Vorderseite 3 Schrupp- und Schlichtschneiden auf, von denen die Schlichtschneide 17' und die Schlichtschneide 19 erkennbar sind.

Deutlich erkennbar ist, dass die Messerplatte 1u zwar im Wesentlichen tangential in die Umfangsfläche 43 eingesetzt ist, tatsächlich aber unter einem Winkel gegenüber dieser geneigt ist, und zwar dergestalt, dass die Schruppschneide 17' über die Umfangsfläche 43 vorsteht, während die gegenüber liegende ebenfalls der Seitenkante 15' zugeordnete Schlichtschneide 19' gegenüber der Umfangsfläche 43 nach innen in Richtung auf die Mittelachse 49 versetzt angeordnet ist.

Die Messerplatte 1 u ist zusätzlich um eine Achse verdreht in der Umfangsfläche 43 angeordnet, die auf dem Mittelpunkt der Seitenfläche 13 senkrecht steht, und zwar dergestalt, dass die Schruppschneide 17' der Vorderseite 3 etwas weiter über die Umfangsfläche 43 ragt, als die auf der Rückseite 9 vorgesehene Schlichtschneide 19.

Letztlich ist also die Messerplatte 1u aus einer exakt tangentialen Position in zwei Richtungen verkippt, nämlich um eine Achse, die senkrecht auf dem Mittelpunkt der Vorderseite steht, und um die Achse, die senkrecht auf dem Mittelpunkt der Seitenfläche 13 steht. Auf diese Weise wird sichergestellt, dass die aktive Schneide der Messerplatte 1 u, nämlich die Schruppschneide 17', am weitesten über die Umfangsfläche 43 des Werkzeugs 1 hinaus steht und dass sowohl die an der Vorderseite 3 vorgesehene Schlichtschneide 19' als auch die an der Rückseite 9 vorgesehene Schlichtschneide 19 gegenüber dieser aktiven Schneide zurückspringen.

Die hier beschriebene Anordnung der Messerplatte 1u in der Umfangsfläche 43 des Werkzeugs 1 ist bei allen Messerplatten identisch, die quasi tangential in die Umfangsfläche 43 angeordnet sind unabhängig davon, ob die Vorder- oder Rückseite der Mittelachse 49 abgewandt ist oder ob die Seitenfläche 11 oder 13 dem Betrachter von Figur 3 zugewandt ist.

In Drehrichtung gesehen, ist vor der Vorderseite 3 der Messerplatte 1 u wiederum ein Spanraum 47 vorgesehen.

Bei dem in Figur 3 dargestellten Ausführungsbeispiel sind in gleichmäßigem Abstand zueinander drei Messerplatten 1u, 1'u und 1"u vorgesehen, deren Orientierung identisch ist, wie bei der Messerplatte 1 u erläutert.

In Umfangsrichtung gesehen sind zwischen der Messerplatte 1"u und 1 s sowie zwischen 1 s und 1 u, 1 u und 1's sowie zwischen 1's und 1'u jeweils Führungsleisten vorgesehen. Zwischen den Messerplatten 1'u und 1"u sind zwei Führungsleisten 53 vorgesehen, die symmetrisch zur Durchmesserlinie 51 angeordnet sind.

Die anhand von Figur 3 erläuterten Führungsleisten erlauben es, Werkzeuge 10 mit einer hohen Auskraglänge zu realisieren.

Die Führungsleisten sind auf übliche Weise in in die Umfangsfläche 43 eingebrachte Nuten 55 eingesetzt und erstrecken sich in Richtung der Mittelachse 49 gesehen über einen Bereich, der größer ist als die in dieser Richtung gemessene Ausdehnung der Messerplatten 1 u, 1'u und 1"u. Sie dienen dazu, das Werkzeug 10 in einer bearbeiteten Bohrung sicher zu führen.

Aus Figur 3 ist ersichtlich, dass das Werkzeug 10 also mindestens eine in die Stirnfläche 41 und in die Umfangsfläche 43 eingesetzte Messerplatte 1s, 1u aufweist, die jeweils mindestens zwei geometrisch definierte Schneiden umfassen. Die Schneiden jeder der Messerplatten sind als Schruppschneide 17 und als Schlichtschneide 19 ausgebildet. Hier sind Wendeplatten vorgesehen, die jeweils diagonal gegenüber liegende Schruppschneiden 17, 17' und Schlichtschneiden 19, 19' aufweisen, was anhand von Figur 1 und 2 im Einzelnen erläutert wurde.

Die Messerplatten sind so ausgebildet, dass bei deren Einbau in die Stirnfläche 41 deren Schlichtschneiden 19 mit der zu bearbeitenden Bohrung in Eingriff treten und bei Einbau in die Umfangsfläche 43 deren Schruppschneiden 19 die Bohrungsoberfläche bearbeiten. Dabei ist es völlig unbeachtlich, ob die Messerplatten mit ihrer Oberseite 5 oder ihrer Unterseite 7 dem Grundkörper des Werkzeugs 10 zugewandt sind. Auch ist es möglich, die Messerplatten um die Mittelachse der Spannschraube 23 um 180° verdreht einzubauen. Immer sind in Abhängigkeit von der Einbaulage die gewünschten Schneiden in Eingriff: Bei Einbau in die Umfangsfläche 43 die Schruppschneiden 19, 19' und bei Einbau in die Stirnfläche 41 die Schlichtschneiden 17, 17'. Es ist also ausgeschlossen, dass eine der Messerplatten falsch in das Werkzeug 10 eingesetzt wird. Voraussetzung ist allerdings - und das ist für einen Fachmann selbstverständlich -, dass jeweils eine Vorderseite 3 oder Rückseite 7 in Drehrichtung weist.

Da alle Messerplatten identisch sind, ist die Lagerhaltung sehr vereinfacht, Reparaturarbeiten und die Erstbestückung eines Werkzeugs sind einfach durchführbar, weil ein Fehleinbau von Messerplatten nicht möglich ist.

Die hier beschriebenen Messerplatten können allerdings nur mit Werkzeugen verwendet werden, die bei der Bearbeitung einer Bohrungsoberfläche in die durch den Pfeil 45 angedeutete Drehrichtung versetzt werden. Bei einer Umkehr der Drehrichtung müssen die Messerplatten spiegelbildlich ausgebildet werden, das heißt, an den Ecken, an denen hier Schlichtschneiden vorgesehen sind, müssen Schruppschneiden vorgesehen werden und umgekehrt.

Das hier beschriebene Werkzeug 10 zeichnet sich dadurch aus, dass es problemlos mit Messerplatten bestückt werden kann, wobei identische Messerplatten verwendet werden können, obwohl das Werkzeug sowohl der Vor-, als auch der Fertigbearbeitung dient, indem je nach Einbaulage der Messerplatten deren Schrupp- oder Schlichtschneiden mit der zu bearbeitenden Bohrungswandung in Eingriff treten. Dabei ist vorgesehen, dass die Schruppschneiden in axialer Richtung gesehen, also in Richtung der Mittelachse 49, den Schlichtschneiden voreilen. Dagegen ragen die Schlichtschneiden in radialer Richtung gesehen weiter über die Umfangsfläche 43 hinaus als die Schruppschneiden.

Die Anzahl der Schlicht- und Schruppschneiden kann an verschiedene Gegebenheiten angepasst werden. Es ist beispielsweise möglich, zwei paarweise gegenüber liegende Messerplatten vorzusehen, wobei zwei gegenüber liegende Messerplatten in der Stirnfläche 41 liegen und um 90° dazu versetzt zwei Messerplatten in der Umfangfläche 43 angeordnet sind. Denkbar ist es aber auch, in die Stirnfläche 41 drei Messerplatten einzubauen und in die Umfangsfläche 43 lediglich zwei Messerplatten. Umgekehrt können in der Umfangsfläche drei und in der Stirnfläche zwei Messerplatten vorgesehen sein. Beispielsweise ist es auch möglich, vier Messerplatten in die Umfangsfläche 43 zur Vorbearbeitung und lediglich eine Messerplatte in die Stirnfläche 41 zur Fertigbearbeitung einzusetzen. Allerdings ist hier nur eine geringere Vorschubgeschwindigkeit realisierbar.

Aus den Erläuterungen wird noch deutlich, dass die Messerplatten von oben oder unten gesehen, also in Richtung der Mittelachse der Bohrung 21 gesehen, rechteckig oder quadratisch ausgebildet sein können. Letztlich können aber auch Messerplatten mit drei oder mehr als vier Ecken realisiert werden. Entscheidend ist die hier vorgesehene Verteilung der Schrupp- und Schlichtschneiden, um zu gewährleisten, dass bei praktisch tangentialem Einbau in die Stirnfläche 41 die Schlichtschneiden aktiv sind, während bei tangentialem Einbau in die Umfangsfläche 43 die Schruppschneiden mit dem zu bearbeitenden Werkzeug in Eingriff treten. Dabei kann, wie anhand von Figur 3 erläutert, eine Neigung der in die Umfangsfläche 43 eingesetzten Messerplatten vorgesehen werden, um einen sanfteren Anschnitt mit dicker werdendem Span zu ermöglichen.

Aus den Erläuterungen wird deutlich, dass bei einem Werkzeug 10 der hier beschriebenen Art in dessen Stirnfläche 41 auch Messerplatten eingebaut werden können, deren Schruppschneiden aktiv sind, während in die Umfangsfläche 43 Messerplatten eingesetzt werden, deren Schlichtschneiden mit dem zu bearbeitenden Werkzeug in Eingriff treten. Es ist also grundsätzlich möglich, den anhand von Figur 3 erläuterten Aufbau des Werkzeugs 10 beizubehalten, aber durch entsprechende Auslegung der Messerplatten Schlichtschneiden in der Stirnseite 41 und Schruppschneiden in der Umfangsfläche 43 aktiv werden zu lassen. Vorzugsweise wären auch bei dieser geänderten Ausführungsform die Messerplatten mittels einer Justiereinrichtung einstellbar, deren Schlichtschneiden mit dem zu bearbeitenden Werkstück in Eingriff treten. Entscheidend ist dann neben der Auslegung der Messerplatten die Anordnung der Schneiden: die Schlichtschneiden eilen gegenüber den Schruppschneiden in axialer Richtung gesehen nach und in radialer Richtung gesehen vor. Entsprechend eilen die Schruppschneiden gegenüber den Schlichtschneiden in axialer Richtung gesehen vor und in radialer Richtung gesehen nach.

Schließlich ist es auch noch möglich, nicht nur die Kontur der Schlicht- und Schruppschneiden unterschiedlich zu wählen, wie dies oben beschrieben wurde. Es können auch im Bereich der Schrupp- und Schlichtschneiden unterschiedliche Materialien eingesetzt werden. Beispielsweise kann im Bereich der Schruppschneide Hartmetall vorgesehen werden, während im Bereich der Schlichtschneide beispielsweise eine PKD-Beschichtung oder aber ein Schneideinsatz vorgesehen werden kann.

Wesentlich ist der Grundgedanke, dass in Zusammenhang mit einem Werkzeug 10 gleichartige Messerplatten verwendet werden können, obwohl das Werkzeug sowohl der Vor- als auch der Fertigbearbeitung dient. Je nach Einbaulage der Messerplatten und deren Ausgestaltung kommen immer nur deren Schrupp- oder Schlichtschneiden mit der zu bearbeitenden Bohrungswandung in Eingriff.

## Patentansprüche

1. Werkzeug zur spanenden Bearbeitung von Bohrungsoberflächen mit mindestens einer in die Stirnfläche (41) des Werkzeugs (10) und mindestens einer in die Umfangsfläche (43) des Werkzeugs (10) eingelassenen Messerplatte (1s,1's; 1u, 1'u, 1''u), die mindestens zwei geometrisch definierte Schneiden aufweisen, wobei die eine Schneide der Messerplatten als Schruppschneide (17,17') und die andere Schneide der Messerplatten als Schlichtschneide (19,19') ausgebildet ist, und die Schneiden an den beiden Enden einer Seitenkante (15,15') der Messerplatten angeordnet sind, **dadurch gekennzeichnet, dass** die in die Stirnseite (41) des Werkzeugs (10) im Wesentlichen tangential zu dieser eingelassene mindestens eine Messerplatte der Schlichtbearbeitung oder der Schruppbearbeitung und die in die Umfangsfläche (43) des Werkzeugs (10) im Wesentlichen tangential zu dieser eingelassene mindestens eine Messerplatte der Schruppbearbeitung oder der Schlichtbearbeitung dient.

2. Werkzeug nach Anspruch 1, **dadurch gekennzeichnet, dass** die mindestens eine Messerplatte eine Vorderseite (3) aufweist, die bei der spanenden Bearbeitung eines Werkstücks in Drehrichtung weist und eine Oberseite (5), die im montierten Zustand dem Grundkörper des Werkzeugs (10) abgewandt ist, dass die im montierten Zustand aktiven Schneiden an der Seitenkante (15, 15') der Messerplatte angeordnet sind, die die Schnittlinie der Vorderseite (3) und der Oberseite (5) bildet.

3. Werkzeug nach Anspruch 1 oder 2, **dadurch gekennzeichnet, dass** die mindestens eine Messerplatte als Wendeplatte ausgelegt ist und dass je zwei Schneiden, die sich diagonal auf der Vorderseite (3) gegenüberliegen, gleich sind und dass sich die Schneiden entlang einer Folge von aneinander grenzenden Seitenkanten abwechseln.

4. Werkzeug nach einem der vorhergehenden Ansprüche, **dadurch gekennzeichnet, dass** die mindestens eine Messerplatte eine der Vorderseite (3) und eine parallel dazu verlaufende gegenüberliegende Rückseite (9) aufweist, die identisch ausgebildet ist wie die Vorderseite (3).

5. Werkzeug nach einem der vorhergehenden Ansprüche, **dadurch gekennzeichnet, dass** die Messerplatten eines Werkzeugs (10) identisch sind.

6. Werkzeug nach einem der vorhergehenden Ansprüche, **dadurch gekennzeichnet, dass** eine Einstellvorrichtung vorgesehen ist, die mit der mindestens einen Schneide in der Stirnseite (41) des Werkzeugs (10) zusammenwirkt.

7. Werkzeug nach einem der vorhergehenden Ansprüche, **dadurch gekennzeichnet, dass** die der Schruppbearbeitung dienenden Messerplatte der der Schlichtbearbeitung dienenden Messerplatte - in axialer Richtung und in Vorschubrichtung gesehen - voreilt.

8. Werkzeug nach einem der vorhergehenden Ansprüche, **dadurch gekennzeichnet, dass** die in die Umfangsfläche (43) des Werkzeugs (10) eingelassenen Messerplatten - in Längsrichtung des Werkzeugs (10) gesehen - geneigt sind, wobei die der Schruppbearbeitung dienende Schruppschneide (17') über die Umfangsfläche (43) des Werkzeugs (10) hinausragt und die an derselben Seitenkante (15') vorgesehene, der Schlichtbearbeitung dienende Schlichtschneide (19) gegenüber der Umfangsfläche (43) zurückspringt.

9. Werkzeug nach einem der vorhergehen Ansprüche, **dadurch gekennzeichnet, dass** die in die Umfangsfläche (43) des Werkzeugs (10) eingelassenen Messerplatten - quer zur Längsrichtung des Werkzeugs (10) gesehen - geneigt sind, wobei die der Schruppbearbeitung dienende Schruppschneide (17') der Vorderseite (3) weiter über die Umfangsfläche (43) hinausragt, als dies die der Schruppschneide (17) nacheilende der Schüchtbearbeitung dienende Schlichtschneide (19) der Rückseite (9), die, wie die Schruppschneide (17') im Bereich der Seitenfläche (13) der Messerplatte (1) angeordnet ist.

10. Werkzeug nach einem der vorhergehenden Ansprüche **dadurch gekennzeichnet, dass** zwei paarweise einander gegenüberliegende Messerplatten vorgesehen sind, zwei in der Stirnfläche (41) und zwei in der Umfangsfläche (43).

11. Werkzeug nach einem der vorhergehenden Ansprüche, **dadurch gekennzeichnet, dass** in der Umfangsfläche (43) drei - vorzugsweise in gleichem Abstand zueinander angeordnete - Messerplatten vorgesehen sind und dass zwischen zweien - vorzugsweise mittig - je eine Messerplatte in der Stirnfläche (41) vorgesehen ist.

12. Werkzeug nach einem der vorhergehenden Ansprüche, **dadurch gekennzeichnet, dass** in der Stirnfläche (41) drei Messerplatten und in der Umfangsfläche (43) zwei Messerplatten vorgesehen sind.

13. Werkzeug nach einem der vorhergehenden Ansprüche, **dadurch gekennzeichnet, dass** in der Stirnfläche (41) eine und in der Umfangsfläche (43) vier Messerplatten vorgesehen sind.

14. Werkzeug nach einem der vorhergehenden Ansprüche, **dadurch gekennzeichnet, dass** die in die Stirnfläche (41) eingesetzte mindestens eine Messerplatte 1s um eine Achse verkippt ist, die auf dem Mittelpunkt der Seitenflächen (11,13) steht und/oder um eine Achse verkippt ist, die senkrecht auf dem Mittelpunkt der Vorderseite (3) und Rückseite (9).

15. Werkzeug nach einem der vorhergehenden Ansprüche, **gekennzeichnet durch** mindestens eine in die Umfangsfläche (43) eingesetzte Führungsleiste.

16. Werkzeug nach einem der vorhergehenden Ansprüche, **dadurch gekennzeichnet, dass** jeweils zwischen zwei Messerplatten, die in die Stirn- oder Umfangsfläche eingesetzt sind, je eine Führungsleiste vorgesehen ist.

## Claims

1. A tool for machining bore surfaces with at least one cutter plate (1s, 1's; 1u, 1'u, 1"u) which is embedded into the end face (41) of the tool (10) and at least one cutter plate (1s, 1's; 1 u, 1'u, 1"u) which is embedded into the circumferential face (43) of the tool (10), each of the cutter plates having at least two geometrically defined cutting edges, one of the cutting edges of the cutter plates being embodied as a roughing cutting edge (17, 17') and the other cutting edge of the cutter plates being embodied as a finishing cutting edge (19, 19'), and the cutting edges being arranged at the two ends of a side edge (15, 15') of the cutter plates, **characterized in that** the at least one cutter plate which is embedded into the end face (41) of the tool (10) and is essentially tangential thereto, serves for finish machining or roughing machining and the at least one cutter plate which is embedded into the circumferential face (43) of the tool (10) and is essentially tangentially thereto serves for roughing machining or finish machining.

2. The tool according to claim 1, **characterized in that** the at least one cutter plate has a front side (3) pointing in the direction of rotation during the machining of a workpiece and an upper side (5) which - in the mounted state - faces away from the base body of the tool (10), **in that** the cutting edges which are active in the mounted state are arranged on the side edge (15, 15') of the cutter plate forming the intersection line of the front side (3) and of the upper side insert (5).

3. The tool according to claim 1 or 2, **characterized in that** the at least one cutter plate is embodied as an indexable cutter plate and **in that** every two cutting edges which lie diagonally opposite one another on the front side (3) are identical, and **in that** the cutting edges alternate along a sequence of adjacent side edges.

4. The tool according to one of the preceding claims, **characterized in that** the at least one cutter plate has a rear side (9) which lies opposite the front side (3), extends parallel thereto and is embodied in an identical way to the front side (3).

5. The tool according to one of the preceding claims, **characterized in that** the cutter plates of a tool (10) are identical.

6. The tool according to one of the preceding claims, **characterized in that** a setting device is provided which interacts with the at least one cutting edge in the end side (41) of the tool (10).

7. The tool according to one of the preceding claims, **characterized in that** the cutter plate which serves for roughing machining moves in advance of the cutter plate which serves for finish machining - as viewed in the axial direction and in the advancing direction.

8. The tool according to one of the preceding claims, **characterized in that** the cutter plates which are embedded into the circumferential face (43) of the tool (10) are inclined - as viewed in the longitudinal direction of the tool (10) - with the roughing cutting edge (17') which serves for roughing machining projecting beyond the circumferential face (43) of the tool (10), and the finishing cutting edge (19) which is provided on the same side edge (15') and serves for finish machining being set back with respect to the circumferential face (43).

9. The tool according to one of the preceding claims, **characterized in that** the cutter plates which are embedded into at the circumferential face (43) of the tool (10) are inclined - as viewed transversely to the longitudinal direction of the tool (10) - with the roughing cutting edge (17'), which serves for roughing machining, of the front side (3) projecting further beyond the circumferential face (43) than the finishing cutting edge (19) of the rear side (9) which lags behind the roughing cutting edge (17) and serves for finish machining, said finishing cutting edge (19) being arranged, like the roughing cutting edge (17'), in the region of the side face (13) of the cutter plate (1).

10. The tool according to one of the preceding claims, **characterized in that** two cutter plates lying in pairs opposite one another are provided, two in the end face (41) and two in the circumferential face (43).

11. The tool according to one of the preceding claims, **characterized in that** three cutter plates - preferably arranged at equal distances from one another - are provided in the circumferential face (43), and **in that** between every two of said cutter plates - preferably centrally - a cutter plate is provided in the end face (41).

12. The tool according to one of the preceding claims, **characterized in that** three cutter plates are provided in the end face (41) and two cutter plates are provided in the circumferential face (43).

13. The tool according to one of the preceding claims, **characterized in that** one cutter plate is provided in the end face (41) and four cutter plates are provided in the circumferential face (43).

14. The tool according to one of the preceding claims, **characterized in that** the at least one cutter plate (1 s) which is inserted into the end face (41) is tilted about an axis which is on the center point of the side faces (11, 13) and/or is tilted about an axis perpendicularly from the center point of the front side (3) and the rear side (9).

15. The tool according to one of the preceding claims, **characterized by** at least one guide bar which is inserted into the circumferential face (43).

16. The tool according to one of the preceding claims, **characterized in that** in each case a guide bar is provided between two cutter plates which are inserted into the end face or the circumferential face.

## Revendications

1. Outil pour l'usinage de surfaces d'alésages par enlèvement de copeaux, comprenant au moins une plaquette de coupe (1s, 1s') encastrée dans la surface frontale (41) de l'outil (10) et au moins une plaquette de coupe (1 u, 1'u, 1 "u) encastrée dans la surface circonférentielle (43) de l'outil (10), lesdites plaquettes de coupe présentant au moins deux tranchants définis géométriquement, l'un des tranchants des plaquettes de coupe étant réalisé sous la forme de tranchant dégrossisseur (17, 17') et l'autre tranchant des plaquettes de coupe sous la forme de tranchant finisseur (19, 19'), et les tranchants étant disposés aux deux extrémités d'une arête latérale (15, 15') des plaquettes de coupe, **caractérisé en ce que** la au moins une plaquette de coupe encastrée dans la surface frontale (41) de l'outil (10) essentiellement tangentiellement à celle-ci sert à l'usinage finisseur ou à l'usinage dégrossisseur et la au moins une plaquette de coupe encastrée dans la surface circonférentielle (43) de l'outil (10) essentiellement tangentiellement à celle-ci sert à l'usinage dégrossisseur ou à l'usinage finisseur.

2. Outil selon la revendication 1, **caractérisé en ce que** la au moins une plaquette de coupe présente une face avant (3) qui regarde dans la direction de rotation lors de l'usinage d'une pièce par enlèvement de copeaux et une face supérieure (5) qui, à l'état monté, est opposée au corps de base de l'outil (10), **en ce que** les tranchants actifs à l'état monté sont disposés sur l'arête latérale (15, 15') de la plaquette de coupe qui forme la ligne d'intersection de la face avant (3) et de la face supérieure (5).

3. Outil selon la revendication 1 ou 2, **caractérisé en ce que** la au moins une plaquette de coupe est conçue en tant que plaquette réversible et **en ce que** chaque fois deux tranchants qui sont opposés en diagonale sur la face avant (3) sont identiques et **en ce que** les tranchants alternent le long d'une succession d'arêtes latérales adjacentes les unes aux autres.

4. Outil selon l'une des revendications précédentes, **caractérisé en ce que** la au moins une plaquette de coupe présente une face arrière (9) opposée à la face avant (3) et parallèle à celle-ci et qui est réalisée de manière identique à la face avant (3).

5. Outil selon l'une des revendications précédentes, **caractérisé en ce que** les plaquettes de coupe d'un outil (10) sont identiques.

6. Outil selon l'une des revendications précédentes, **caractérisé en ce qu'**il est prévu un dispositif de réglage qui coopère avec le au moins un tranchant dans la surface frontale (41) de l'outil (10).

7. Outil selon l'une des revendications précédentes, **caractérisé en ce que** la plaquette de coupe servant à l'usinage dégrossisseur est devant la plaquette de coupe servant à l'usinage finisseur quand on regarde dans la direction axiale et dans la direction d'avance.

8. Outil selon l'une des revendications précédentes, **caractérisé en ce que** les plaquettes de coupe encastrées dans la surface circonférentielle (43) de l'outil (10) sont inclinées, quand on regarde dans la direction longitudinale de l'outil (10), le tranchant dégrossisseur (17') servant à l'usinage dégrossisseur dépassant de la surface circonférentielle (43) de l'outil (10) et le tranchant finisseur (19) prévu sur la même arête latérale (15'), servant à l'usinage finisseur, étant en retrait par rapport à la surface circonférentielle (43).

9. Outil selon l'une des revendications précédentes, **caractérisé en ce que** les plaquettes de coupe encastrées dans la surface circonférentielle (43) de l'outil (10) sont inclinées, quand on regarde transversalement à la direction longitudinale de l'outil (10), le tranchant dégrossisseur (17') de la face avant (3) servant à l'usinage dégrossisseur dépassant davantage de la surface circonférentielle (43) que le tranchant finisseur (19) de la face arrière (9) situé derrière le tranchant dégrossisseur (17) et servant à l'usinage finisseur, ledit tranchant finisseur (19) étant disposé, comme le tranchant dégrossisseur (17'), dans la zone de la surface latérale (13) de la plaquette de coupe (1).

10. Outil selon l'une des revendications précédentes, **caractérisé en ce qu'**il est prévu deux plaquettes de coupe opposées l'une à l'autre par paires, deux dans la surface frontale (41) et deux dans la surface circonférentielle (43).

11. Outil selon l'une des revendications précédentes, **caractérisé en ce qu'**il est prévu dans la surface circonférentielle (43) trois plaquettes de coupe disposées de préférence à égale distance les unes des autres et dans la surface frontale (41) chaque fois une plaquette de coupe entre deux plaquettes de coupe, de préférence au milieu.

12. Outil selon l'une des revendications précédentes, **caractérisé en ce qu'**il est prévu trois plaquettes de coupe dans la surface frontale (41) et deux plaquettes de coupe dans la surface circonférentielle (43).

13. Outil selon l'une des revendications précédentes, **caractérisé en ce qu'**il est prévu une plaquette de coupe dans la surface frontale (41) et quatre plaquettes de coupe dans la surface circonférentielle (43).

14. Outil selon l'une des revendications précédentes, **caractérisé en ce que** la au moins une plaquette de coupe (1s) insérée dans la surface frontale (41) est basculée autour d'un axe qui est situé au centre des surfaces latérales (11, 13) et/ou autour d'un axe qui est perpendiculaire au centre de la face avant (3) et de la face arrière (9).

15. Outil selon l'une des revendications précédentes, **caractérisé par** au moins une baguette de guidage insérée dans la surface circonférentielle (43).

16. Outil selon l'une des revendications précédentes, **caractérisé en ce qu'**il est prévu chaque fois une baguette de guidage entre deux plaquettes de coupe qui sont insérées dans la surface frontale ou la surface circonférentielle.
